# EUROPEAN PATENT SPECIFICATION

(11) **EP 0 526 591 B1**
(45) Date of publication and mention of the grant of the patent: **08.11.1995**
(21) Application number: 91919035.5
(22) Date of filing: 24.04.1991
(51) Int. Cl.: F01N 3/20, F01N 9/00, F01L 1/34

(54) **MEANS FOR CONTROLLING EXHAUST TEMPERATURE ON A CATALYTICALLY PURIFIED COMBUSTION ENGINE**
SYSTEM ZUR STEUERUNG DER ABGAS-TEMPERATUR EINES KATALYTISCH GEREINIGTEN VERBRENNUNGSMOTORS
SYSTEME DE REGULATION DE LA TEMPERATURE DE L'ECHAPPEMENT DANS UN MOTEUR A COMBUSTION INTERNE PURIFIEE PAR PROCEDE CATALYTIQUE

(30) Priority: 25.04.1990 SE 9001483
(43) Date of publication of application: 10.02.1993
(73) Proprietor: AB VOLVO, 405 08 Göteborg (SE)
(72) Inventor: HELLBERG, Lars, S-414 73 Göteborg (SE); SANDBERG, Lars, S-413 19 Göteborg (SE)
(74) Representative: Mossmark, Anders
(86) International application number: SE9100290
(87) International publication number: WO9116529

(56) References cited:
- EP-A- 0 193 622
- EP-A- 0 310 441
- EP-A- 0 317 372
- DE-A- 3 306 484
- SE-B- 396 792
- US-A- 4 209 981
- US-A- 4 404 804
- PATENT ABSTRACTS OF JAPAN, Vol. 9, No. 51, M361, Abstract of JP 59-188020, publ. 1984-10-25 (MAZDA K.K.).

## Description

### Field of the invention:

The present invention relates to an apparatus for controlling exhaust temperature in accordance with the preamble of claim 1.

### Technical background:

Demands for reductions in environmentally hazardous exhaust emissions from cars which are propelled by internal combustion engine are increasing, simultaneously as fuel consumption is reduced. The development has led to engines with a high compression ratio for maximum efficiency which also can run upon comparably low grade fuel.

As a consequence of these modern engines, the temperature in the stream of exhausts tend to increase. This heat energy promotes the destruction of rest products in the exhausts, but the heat can be difficult to cool off from the engine housing. The increased heat energy raises the tendency for engine knocking, and in particular for turbocharged engines, the heat may permeate over to the suction side and negatively influence the fuel/air mixture.

It is also desirable that the catalytic converter which is mounted in the exhaust system of the engine can be made to work under as favourable conditions as possible. This implies that the catalytic converter should reach its normal working temperature as quick as possible after a cold start, so that environmentally hazardous exhaust emissions are reduced to a minimum. Previously described problems with increased exhaust temperature may also damage the emission systems, promoting deterioration of the catalytic cleaning.

European patent application EP-A-0 193 622 describes a known apparatus for controlling the exhaust temperature in an internal combustion engine. The apparatus comprises a temperature sensor connected with a control unit. The object of this apparatus is to achieve a quick heating of the catalyst.

A prior art method of reducing exhaust temperature is to spray a cooling medium into the combustion chamber of the engine, at those operation conditions when temperature tends to rise above the highest permitted level. A system for feed-back control of the exhaust temperature regulation is described in the Swedish Patent Application 8802226-4, wherein a temperature sensing means placed within the exhaust conduit is connected to a governor which controls the supply of cooling medium to the combustion chamber.

It is also known to arrange an electrified preheating of the exhaust stream to the catalytic converter, the purpose of said preheating being to promote the heating of the catalytic converter up to normal working temperature after a cold start.

The increasing use of various separate systems for controlling different parameters in the car engine emission control system leads to more complexity, both with reference to manufacturing and later service and repair. It is therefore a vital issue to provide better integration of those systems, especially as differences in the systems are very significant with reference to carburettor, injection and turbo engines.

### The technical problem:

One object of the present invention is therefore to provide an apparatus for controlling exhaust temperature, both for elimination of problems with increased temperature and problems with obtaining normal working temperature in the catalytic converter after a cold start.

### The solution:

This object is achieved according to the invention, in that there is provided control means which further comprise means for variation of the engine power via controlling the opening duration of the inlet valves. This apparatus can be used on carburettor, injection as well as turbocharged engines, in order to optimize emission control. It is possible to use a single control means for different engine applications, or the control unit can use different control means for different applications.

The accompanying subclaims describe different advantageous embodiments of those control means.

### Brief description of the drawings:

One embodiment of the invention will now be described in more detail with reference to the accompanying drawing, in which
- Fig. 1: schematically illustrates a turbocharged internal combustion engine having a control system according to the invention, which is equipped with a number of control means, and
- Fig. 2: is a block diagram showing the lay-out of the control system.

### Preferred embodiments of the invention:

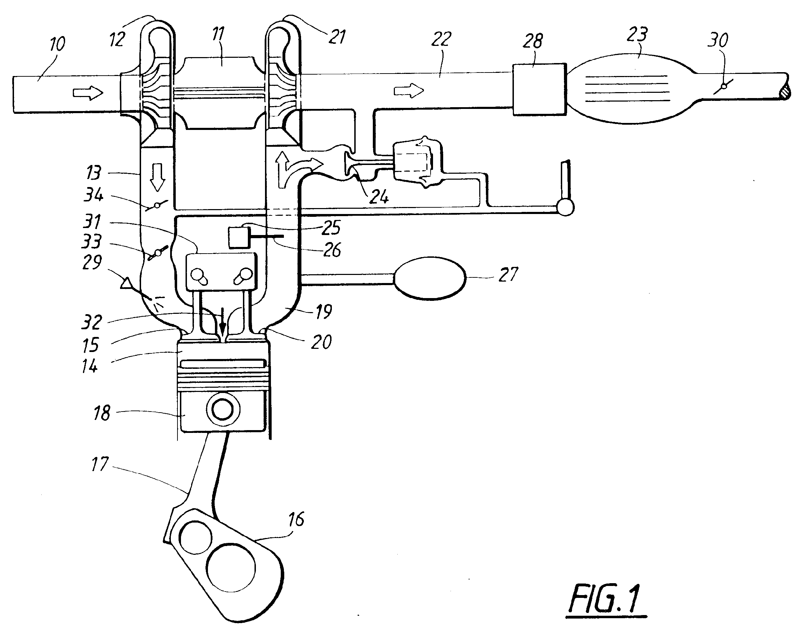

Fig 1 shows the invention applied upon an internal combustion engine having an exhaust driven turbocharger, said engine being provided with a number of different control means, which normally are not found at the same time upon an engine, but are shown in this way for illustration of the invention.

In Fig. 1 10 designates a suction pipe, which runs between an air filter, not shown in the drawing, and the charging rotor chamber 12 of the turbocharger 11. An inlet conduit 13 runs between the charging rotor chamber 12 and the combustion chamber 14 of the engine via the inlet valve 15. The engine crankshaft is designated by 16, the connecting rod by 17 and the piston by 18.

An exhaust manifold 19 runs from the combustion chamber 14 of the engine via the exhaust valve 20 to driven rotor chamber 21 of the turbocharger 11. An exhaust pipe 22 runs from the last mentioned chamber 21 to the atmosphere via a catalytic converter 23. In a manner well known in the field, a bypass-valve 24 enables exhausts to bypass the driven rotor chamber 21 and evacuate directly to the exhaust pipe 22, when the charging pressure in the inlet channel 13 surpasses a maximum value.

A control unit 25 is connected to a sensor 26 at the manifold 19, e.g. a thermoelement, and comprises electronic circuits for conversion of the signal from the thermoelement to a control signal. This control signal can according to the invention be used for micro processor control of different control mean, so that the exhaust temperature is optimized.

These control means comprise an apparatus 27 for supply of secondary air to the manifold 19. This supply of secondary air leads to combustion of unburnt fuel residues inside the manifold, which elevates the exhaust temperature enabling reductions in the time for heating the catalytic converter up to its normal operation temperature after a cold start.

Alternatively, an electrified preheating catalytic converter 28 can be used for increasing the exhaust temperature, when the control unit 25 detects a subnormal exhaust temperature.

The control unit 25 can also be connected to the system 29 for supply of fuel (fuel injection), for controlling this parameter in order to elevate the exhaust temperature after a cold start.

The exhaust system 22 can also comprise a butterfly valve 30 for feed-back control of the exhaust counter pressure, i.e. a butterfly valve which is mounted in series after the catalytic converter and makes it possible to reduce the flow speed of the exhaust gases through the exhaust system, which also elevates the exhaust temperature.

This later arrangement with butterfly valve 30 can also be utilized for reducing the exhaust temperature wherein the valve is opened for increasing the gas flow speed through the exhaust pipe leading to a reduction in exhaust temperature.

Means 31 for controlling the timing points for opening and closing the valves can also be used for regulating exhaust temperature both upward and downward. For example, the opening duration of the inlet valve can be used for limiting the power delivery from the engine, which reduces the exhaust temperature. If, on the other hand, the exhaust valve is timed to open earlier than normal, unburned gases will stream out into the manifold and burn within this conduit, leading to an increased exhaust temperature and which can be utilized for speeding up heating of the catalytic converter to its normal operating temperature after a cold start.

Subsequently the control unit 25 can be connected to means for regulating the ignition system 32 of the engine, so that a reduction in the power output is accomplished via control of ignition timing for a reduction of exhaust temperature. If, on the other hand, the ignition point is retarded, a part of the combustion will be moved from the combustion chamber 14 and out into the manifold, again, as in the previously described example leads to an increased exhaust temperature, which can be used for speeding up the heating of the catalytic converter up to its normal operating temperature after a cold start.

A reduction in the exhaust temperature can be brought about by connecting the control unit 25 to the valve 24, so that the charging overpressure of the engine, i.e. the power output, can be controlled with reference to exhaust temperature.

Additionally, a throttle means 33 or 34 which is regulated by the control unit 25 can be used reducing the engine power output if the exhaust temperature rises above a maximum permitted level. Thus, the throttle means 33 can be exemplified by an electronically controlled throttle valve, while the throttle means 34 can be exemplified by a feed-back controlled help throttle which is used in series with the main throttle and is controlled by more "rudimentary" electronic than the earlier described.

The temperature sensor 26 of the control unit 25 can be so designed that it protrudes into the manifold 19. Alternatively, it can be so designed that it measures the material temperature by means of a suitable control algorithm.

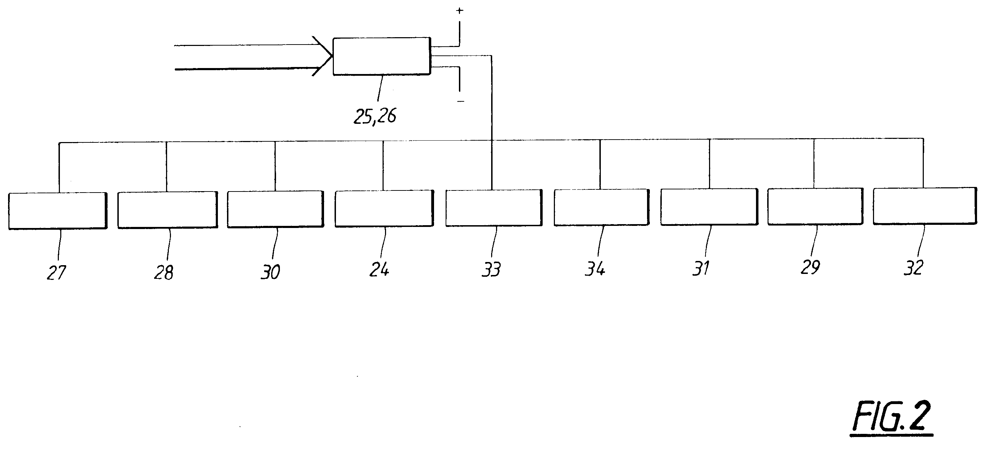

Fig. 2 illustrates schematically how the control unit 25 with the sensor means 26 receives data input and is electrically connected to the control means 24, 27-34.

## Claims

1. Apparatus for controlling exhaust temperature in an internal combustion engine having an exhaust system (19, 22) comprising at least one catalytic converter (23), inlet and exhaust valves (15, 20) and at least one temperature sensing means (26) for sensing exhaust temperature, which means (26) is connected to a control unit (25), which in its turn is connected to control means (24, 27-34) for controlling at least one of the engine operation parameters and for variation of exhaust temperature via the timing point for opening the exhaust valves (20), **characterized in** that said control means (24, 27-34) further comprise means (31) for variation of engine power via controlling the opening duration of the inlet valves (15).

2. Apparatus according to claim 1, **characterized** in that the control means comprise means (32) for controlling the ignition timing.

3. Apparatus according to claim 1, **characterized** in that the control means comprise means (30) for controlling the flow speed of the exhausts through the exhaust system (22).

4. Apparatus according to any one of claims 1-3, **characterized** in that the control means comprise means (33; 34) for controlling gas flow speed in the gas stream at the inlet of the engine.

5. Apparatus according to any one of claims 1-4, **characterized** in that the control means comprise means (29) for controlling the supply of fuel to the engine.

6. Apparatus according to any one of claims 1-5, **characterized** in that the control means comprise an electrified heating radiator (28) which is placed in the exhaust system (22) upstream the catalytic converter (23) for heating the exhaust stream.

7. Apparatus according to any one of the previous claims, wherein the engine is provided with a supercharger (11), **characterized** in that the control means comprise means (24) for controlling the charging overpressure.

8. Apparatus according to any one of claims 1-7, **characterized** in that the temperature sensing means (26) is a thermoelement which protrudes into the exhaust conduit (19) close to one of the exhaust valves (20).

9. Apparatus according to any one of claims 1-8, **characterized** in that the temperature sensing means (26) is adapted to sense the material temperature in engine exhaust collector (19).

## Patentansprüche

1. Vorrichtung zur Steuerung der Abgastemperatur bei einem Verbrennungsmotor mit einem Abgassystem (19, 22) mit wenigstens einem Katalysator (23), Einlaß- und Auslaßventilen (15, 20) und mit wenigstens einer Temperaturfühleinrichtung (26) zum Abfühlen der Abgastemperatur, welche mit einer Steuerungseinheit (25) verbunden ist, die ihrerseits mit einer Steuerungseinrichtung (24, 27 - 34) zur Steuerung wenigstens eines Motorbetriebsparameters und zur Veränderung der Abgastemperatur über die Steuerung der Öffnung der Auslaßventile (20) in Verbindung steht,
dadurch gekennzeichnet,
daß die Steuerungseinrichtung (24, 27 - 34) weiterhin eine Einrichtung (31) zur Änderung der Motorleistung über das Steuern der Öffnungsdauer der Einlaßventile (15) aufweist.

2. Vorrichtung nach Anspruch 1,
dadurch gekennzeichnet,
daß die Steuerungseinrichtung eine Einrichtung (32) zur Steuerung des Zündzeitpunkts aufweist.

3. Vorrichtung nach Anspruch 1,
dadurch gekennzeichnet,
daß die Steuerungseinrichtung eine Einrichtung (30) zur Steuerung der Strömungsgeschwindigkeit des Abgases durch das Abgassystem (22) aufweist.

4. Vorrichtung nach einem der Ansprüche 1 - 3,
dadurch gekennzeichnet,
daß die Steuerungseinrichtung eine Einrichtung (33; 34) zur Steuerung der Gasströmungsgeschwindigkeit in dem Gasstrom am Einlaß des Motors aufweist.

5. Vorrichtung nach einem der Ansprüche 1 - 4,
dadurch gekennzeichnet,
daß die Steuerungseinrichtung eine Einrichtung (29) zur Steuerung der Kraftstoffzufuhr zu dem Motor aufweist.

6. Vorrichtung nach einem der Ansprüche 1 - 5,
dadurch gekennzeichnet,
daß die Steuerungseinrichtung einen elektrisch beheizten Kühler (28) aufweist, der in dem Abgassystem (22) stromaufwärts von dem Katalysator (23) zum Heizen des Abgasstroms angeordnet ist.

7. Vorrichtung nach einem der vorangehenden Ansprüche, bei dem der Motor mit einem Auflader (11) versehen ist,
dadurch gekennzeichnet,
daß die Steuerungseinrichtung eine Einrichtung (24) zur Steuerung des Ladeüberdrucks aufweist.

8. Vorrichtung nach einem der Ansprüche 1 - 7,
dadurch gekennzeichnet,
daß die Temperaturabfühleinrichtung (26) ein Thermoelement ist, das in den Abgaskanal (19) nahe eines der Auslaßventile (20) vorsteht.

9. Vorrichtung nach einem der Ansprüche 1 - 8,
dadurch gekennzeichnet,
daß die Temperaturabfühleinrichtung (26) für das Abfühlen der Materialtemperatur in dem Motorauspuffkrümmer (19) vorgesehen ist.

## Revendications

1. Appareil de réglage de la température d'échappement d'un moteur à combustion interne comprenant un circuit d'échappement (19, 22) qui comporte au moins un convertisseur catalytique (23), des soupapes d'admission et d'échappement (15, 20) et au moins un dispositif (26) de détection de température des gaz d'échappement, ce dispositif (26) étant connecté à une unité de commande (25) qui est elle-même connectée à un dispositif (24, 27-34) destiné à commander au moins un paramètre de fonctionnement du moteur et à faire varier la température des gaz d'échappement par passage au point de synchronisation de l'ouverture des soupapes d'échappement (20), caractérisé en ce que le dispositif de commande (24, 27-34) comporte en outre un dispositif (31) destiné à faire varier la puissance du moteur par réglage de la durée d'ouverture des soupapes d'admission (15).

2. Appareil selon la revendication 1, caractérisé en ce que le dispositif de commande comporte un dispositif (32) de réglage du moment de l'allumage.

3. Appareil selon la revendication 1, caractérisé en ce que le dispositif de commande comporte un dispositif (30) de réglage de la vitesse de circulation des gaz d'échappement dans le circuit (22) d'échappement.

4. Appareil selon l'une quelconque des revendications 1 à 3, caractérisé en ce que le dispositif de commande comporte un dispositif (33 ; 34) de réglage de la vitesse de circulation du courant de gaz à l'entrée du moteur.

5. Appareil selon l'une quelconque des revendications 1 à 4, caractérisé en ce que le dispositif de commande comporte un dispositif (29) de réglage de l'alimentation du moteur en carburant.

6. Appareil selon l'une quelconque des revendications 1 à 5, caractérisé en ce que le dispositif de commande comporte un radiateur (28) de chauffage alimenté électriquement, placé dans le circuit d'échappement (22) en amont du convertisseur catalytique (23) et destiné à chauffer le courant de gaz d'échappement.

7. Appareil selon l'une quelconque des revendications précédentes, dans lequel le moteur comporte un organe de suralimentation (11), caractérisé en ce que le dispositif de commande comporte un dispositif (24) de réglage de la surpression d'alimentation.

8. Appareil selon l'une quelconque des revendications 1 à 7, caractérisé en ce que le dispositif (26) de détection de température est un thermocouple qui dépasse dans le conduit (19) des gaz d'échappement près de l'une des soupapes d'échappement (20).

9. Appareil selon l'une quelconque des revendications 1 à 8, caractérisé en ce que le dispositif (26) de détection de température est destiné à détecter la température du matériau dans le collecteur (19) d'échappement du moteur.
